# EUROPEAN PATENT SPECIFICATION

(11) **EP 1 883 198 B1**
(45) Date of publication and mention of the grant of the patent: **02.03.2016**
(21) Application number: 06840610.7
(22) Date of filing: 22.12.2006
(51) Int. Cl.: H04L 29/06

(54) **METHOD AND SYSTEM FOR INTERACTING WITH MEDIA SERVERS BASED ON THE SIP PROTOCOL**
VERFAHREN UND SYSTEM ZUR INTERAKTION MIT MEDIEN-SERVERN BASIEREND AUF DEM SIP-PROTOKOLL
PROCÉDÉ ET SYSTÈME D'INTERACTION AVEC DES SERVEURS MULTIMÉDIA SUR LA BASE DU PROTOCOLE SIP

(30) Priority: 11.01.2006 CN 200610006527
(43) Date of publication of application: 30.01.2008
(73) Proprietor: Huawei Technologies Co., Ltd., Longgang District Shenzhen, Guangdong 518129 (CN)
(72) Inventor: DARSHAN, B., Bangalore-560008 (IN)
(74) Representative: Thun, Clemens
(86) International application number: PCT/CN2006/003553
(87) International publication number: WO 2007/079652

(56) References cited:
- WO-A1-03/040942
- CN-A- 1 499 804
- CN-A- 1 633 129
- DARSHAN BILDIKAR HUAWEI TECHNOLOGIES INDIA PVT LTD BANGALORE INDIA: "SIP Interface for Media Servers with BAU; draft-darshan-bau-00.txt" IETF STANDARD-WORKING-DRAFT, INTERNET ENGINEERING TASK FORCE, IETF, CH, 1 December 2005 (2005-12-01), XP015043382 ISSN: 0000-0004
- ROSENBERG ET AL: "RFC 3261: SIP: Session Initiation Protocol" IETF REQUEST FOR COMMENTS, XX, XX, 1 June 2002 (2002-06-01), pages 1-269, XP002323877
- D. BURKE,M. SCOTT, J. HAYNIE, R. AUBURN, S. MCGLASHAN: 'SIP Interface to VoiceXML Media Services draft-burke-vxml-00.txt', [Online] 08 December 2005, IETF Retrieved from the Internet: <URL:http://tools.ietf.org/html/draft-burke -vxml-00> [retrieved on 2014-10-16]
- 'PacketCable TM Audio Server Protocol Specification', [Online] 20 June 2001, Retrieved from the Internet: <URL:http://www.cablelabs.com/wp-content/up loads/specdocs/PKT-SP-ASP-I02-010620.pdf> [retrieved on 2015-07-06]

## Description

This application claims the benefit of priority from Chinese patent application No. 200610006527.0 filed Jan 11, 2006, titled "METHOD FOR INTERACTING WITH A MEDIA SERVER IN SIP NETWORK".

### Field of the Invention

The present invention relates to communication technologies, especially to communication technologies related to the Session Initiation Protocol (SIP), and in particular to a method and system for interacting with a media server based on the SIP protocol.

### Background of the Invention

The SIP protocol is a core protocol for a multimedia communication system constituted by Internet Engineering Task Force (IETF). As an important protocol in the Next Generation Network (NGN), the SIP protocol is mainly used to implement the function of multimedia session control. At present, the SIP protocol is regarded as a good protocol in the industry and is taken as one of the next generation core protocols for the multimedia communication network based on the Internet Protocol (IP). The SIP protocol provides a series of call control functions. The specific content of SIP may be referred to the description of Request for comments (RFC) standard 3261 defined by the IETF.

In the communication network based on the SIP protocol, it is required to provide basic media services, such as Play Announcement (PA) and Interactive Voice Response (IVR) application. The IVR may be used to prompt a user to press a key to input a choice and implement an operation for a data base according to the choice. This is the most popular method for a user to implement the self-help service and has become an important part of the self-help service trading. The typical applications of the IVR include the stock entrusting and the telephone banking, etc. The IVR generally provides a multi-layer voice menu and may be integrated, as an entire module, into a call center. In the IVR application, the interaction with a user may be implemented by playing an announcement and collecting the Dual Tone Multi Frequency (DTMF) strings input by the user.

When the basic media service is provided through a communication network based on the SIP protocol, static media is required to achieve the requirements of various applications for playing announcement for the user. The static media is generally provided by a media server. The media server is an enhanced media service platform in the NGN and is a separate device for providing special media resource functions in a soft switch system. Also, the media server is an important device in the packet switching network for providing media processing functions in basic and enhanced services, including collecting and coding for the DTMF strings, generation and sending of the signal tone, sending the announcement, various recourse functions of conference and conversion between different coding/decoding algorithms, communication functions and management and maintenance functions. The media server is constituted as the core of the application and service infrastructure and may provide services at any moment in any place without considering the type of the access network. The media server may be controlled through the Media Gateway Control Protocol (MGCP) and the SIP protocol.

The Voice Extensible Markup Language (VXML) is a technology for establishing an audio session having characteristics of the comprehensive voice, the digital audio, the voice recognition, the DTMF input, the recording and replaying, the telephone communication and the mixed initial session. The VXML supports an interactive access to a server on Internet through a telephone. By using the VXML, a voice service may easily be built and the IVR system based on Internet may be developed, so that the information interacting between Internet and the IVR platform is implemented.

In an existing solution, the main method for interacting with the media server in the SIP network uses the VXML. Generally, a SIP entity uses SIP INVITE or REFER message to establish a session with the media server. The URL request of the SIP message often includes the address of the VXML. The media server requests to download the VXML file from a web server through the Hyper Text Transfer Protocol (HTTP) and resolves the VXML for implementing. The subsequent processes are controlled by the VXML inner logic.

In practice, the VXML file needs to be obtained for each application in the solution. However, for some simple applications, such as applications using simple operations of PA, Play and Collect (PC) or Play and Record (PR), it is complicated for the operations to obtain the VXML file and resolve the VXML file for implementing, and a lot of resources are consumed.

An IETF memo, draft-ietf-mediactrl-vxml-00.txt, "SIP Interface to Voice XML Media Services" by D. Burke et al., describes a SIP interface to Voice XML media services. Commonly, application servers control media servers use this protocol for pure Voice XML processing capabilities. This protocol is an adjunct to the full MEDIACTRL protocol and packages mechanism.

### Summary of the Invention

An embodiment of the present invention provides a method for interacting with a media server in a SIP communication network, so as to improve the performance of Interactive Voice Response (IVR) service.

An embodiment of the present invention provides a method for interacting with a SIP entity based on SIP protocol according to claim 1.

An embodiment of the present invention further provides a media server for interacting with a SIP entity based on SIP protocol according to claim 6.

According to the solutions provided in embodiments of the present invention, in a communication network based on the SIP protocol, a simple application is implemented by using the Basic Audio Server Event Package (BAU) specification while the VXML is not used. The interaction with a media server based the SIP protocol in the network is implemented by using a SIP interface complying with the BAU specification.

According to an embodiment of the present invention, for a simple application which may be implemented by using the BAU specification, the obtaining for the VXML may not be needed everywhere. Therefore, the load of the network and the processor is considerably reduced and the usage of the network and processor is optimized.

Moreover, the interface used in embodiments of the present invention totally complies with the SIP protocol, thus interaction between products of different manufacturers may be done without an enormous changing among the interfaces.

Furthermore, since many existing commercial media servers support the BAU event package, smoothly upgrading may be implemented according to embodiments of the present invention. Therefore, a high cost caused by the upgrading may be avoided and the disposition may be easily performed.

### Brief Description of the Drawings

Figure 1 is a schematic diagram illustrating a procedure for exchanging messages between a SIP entity and a media server according to a first embodiment of the present invention;
Figure 2 is a schematic diagram illustrating a procedure for exchanging messages between a SIP entity and a media server according to a second embodiment of the present invention.

### Detailed Description of the Embodiments

For making the technical solution and advantage of the present invention more clear, the present invention will be described in detail in accordance with the accompanying drawings.

In view of the BAU of the Network-Based Call Signaling (NCS) or the basic audio server in the PacketCable specification, typical functions of the media server, such as playing, recording, DTMF detection and reporting, may also be implemented simply. At present, many commercial media servers support the BAU event package. Therefore, through adding a SIP interface complying with the basic BAU specification in the media server according to an embodiment of the present invention, the typical functions of the media server may be implemented simply in a communication network based on the SIP protocol.

According to an embodiment of the present invention, a parameter related to the BAU event package is carried in the SIP message to implement the SIP interface complying with the BAU specification, and the SIP interface is used for interacting with the media server, thereby functions defined in the BAU specification, such as audio variable, audio terminal control, digit buffer control, special key sequence and re-prompt during data collecting, are implemented by the SIP server (for example, the application server).

For better understanding, embodiments of the present invention will be described below with reference to the drawings.

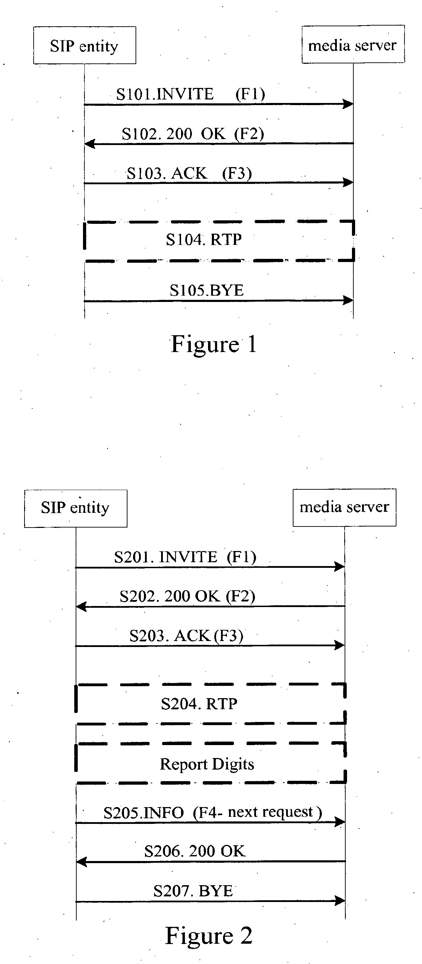

According to the first embodiment of the present invention, in the method for interacting with the media server in the SIP network, the procedure for exchanging messages between entities is shown in Figure 1. In this embodiment, the session establishing and terminating are implemented. A relevant example of a signaling procedure is as follows.

### F1 --> INVITE to Media Server

### INVITE

sip:dialog@mrs.example.com;annc.BAU.pa;an=file://welcome.wav;it=3;iv=2
Via: SIP/2.0/UDP client.example.com
From: <sip:user@client.example.com>;tag=8000
To:
<sip:dialog@mrs.example.com;annc.BAU.pa;an=welcome.wav;it=3;iv=4>
Contact: sip:user@client.example.com
Call-ID: 12345678@client.example.com
CSeq: 1 INVITE
Content-Type: application/sdp
Content-Length: ...
v=0
o=user 2890844526 2890844526 IN IP4 client.example.com
s=Session SDP
c=IN IP4 client.example.com
t=3034423619 0
m=audio 49170 RTP/AVP 0
a=rtpmap:0 PCMU/8000
F2 --> 200 OK from Media Server
SIP/2.0 200 OK
From: <sip:user@client.example.com>;tag=8000
   To:
   <sip:dialog@mrs.example.com;annc.BAU.pa;an=welcome.wav;it=3;iv=4>;ta g=1a1e0a19
   CSeq: 1 INVITE
   Call-ID: 12345678@client.example.com
   Via: SIP/2.0/UDP client.example.com
   Contact:<sip:dialog@mrs.example.com;transport=udp>
   Content-Length: ...
   Content-Type: application/sdp
v=0
   o=mrs 2890844527 2890844527 IN IP4 mrs.example.com
   s=Session SDP
   c=IN IP4 mrs.example.com
   t=3034423619 0
   m=audio 3456 RTP/AVP 0
   a=rtpmap:0 PCMU/8000
F3 --> ACK to Media Server
ACK
sip:dialog@mrs.example.com;annc.BAU.pa;an=file://welcome.wav;it=3;iv=2 SIP/2.0
   From: <sip:user@client.example.com>;tag=8000
   To:
   <sip:dialog@mrs.example.com;annc.BAU.pa;an=welcome.wav;it=3;iv=4>;ta g=1a1e0a19
   Call-ID: 12345678@client.example.com
   CSeq: 1 ACK
   Via: SIP/2.0/UDP client.example.com
   Content-Length: 0

In the first embodiment, as shown in Figure 1, the procedure for interacting with the media server is as follows:
Step S101: a SIP entity sends a SIP invite message (INVITE (F1)) carrying BAU package-related information. In the SIP message sent by the SIP entity, the carried BAU package-related information includes an identity for indicating the type of the BAU session and a parameter corresponding to this type of session.

Step S102: the media server returns a response message (200 OK (F2)). The response message is a response to the INVITE (F1) message.

Step S103: the SIP entity returns an acknowledgment message (ACK). The message acknowledges the 200 OK (F2) message.

Step S104: the SIP entity establishes a session with the media server through the Real-Time Transport Protocol (RTP).

Step S105: the SIP entity sends a terminating message (BYE) to the media server to terminate the session. It should be noted that, although the BYE message is sent by the SIP entity to terminate the session in the first embodiment of the present invention, the BYE message may also be sent by the media server to terminate the session in practice, and the essence of the present invention is not affected.

In the present embodiment, in order to evoke the BAU package from the media server by the SIP entity, the parameters of the SIP information and the BAU package information related to the session are required to be carried in the header field of the SIP message by the SIP entity, as shown below.
DIALOG-URL = sip-ind dialog-ind "@" hostport dialog-parameters
sip-ind = "sip:" / "sips:"
dialog-ind = "dialog"
dialog-parameters = ";" dialog-param [ bau-parameters ]
dialog-param = "annc.BAU.pa" / "annc.BAU.pc" / "annc.BAU.pr / annc.cancel"
bau-parameters = bau-param [ bau-parameters ]
bau-param = ";" bau-keyword "=" bau-value
bau-keyword = token
bau-value = token

The extended Backus-Naur Form (BNF) is taken as the syntax of the parameters.

In the first embodiment of the present invention, the type of the BAU session is defined as a sub-package of the BAU package, including PA, PC and PR.

The parameters corresponding to PA, PC and PR are shown in the table 1. In table 1, O represents an optional item (Optional), M represents a mandatory item (Mandatory) and F represents a forbidden item (Forbidden).

**Table 1**

| Symbol | Definition | PA | PC | PR |
|---|---|---|---|---|
| an | Announcement | O | F | F |
| ap | Append | F | F | O |
| cb | Clear Digit Buffer | F | O | O |
| dm | Digit map | F | F | O |
| du | Duration | O | F | F |
| fdt | First Digit Timer | F | O | F |
| ift | Initial Prompt | F | O | O |
| it | Iterations | O | F | F |
| iv | Interval | O | F | F |
| na | Number of Attempts | F | O | O |
| ni | Non Interruptible Play | F | O | O |
| rid | Recording ID | F | F | M |
| rlt | Recording Length | F | F | M |
| rsk | Restart Key | F | O | O |
| rtk | Return Key | F | O | O |

The Announcement indicates a name of a voice file to be played. A typical form is the local Universal Resource Locator (URL). Optionally, other URL forms, such as the HTTP, may also be used.

The Append indication indicates the storage mode of the record during the PR operation and has an effective value of true or false. If the value is defined as true, the recorded audio is added to an existing content indicated by a recording ID.

The Clear Digit Buffer indication indicates whether to clear the digit buffer before playing the voice and has an effective value of true or false. The Digit Map indicates a map value of a key value and has an effective value including 0∼9, # and *. The Duration indicates the maximum time length for playing a specific voice and this parameter has a higher priority than the parameters of Iterations and the Interval.

The First Digit Timer indicates the total time length for inputting the first digit by a user. The unit of the First Digit Timer is 100ms and the default value of the First Digit Timer is 50.

The Initial Prompt is to prompt a user to input a DTMF string or speak.

The Interval indicates the silence time length between voice iterations. The unit of the Interval is 100ms and the default value of the Interval is 10.

The Iterations indicates the maximum length of the time for playing a voice. -1 suggests repeating a voice and the default value of the Iterations is 1.

The Number of attempts indicates the number of allowing a user to make a mistake and retry when the user inputs or records.

The Non Interruptible Play indicates whether a playing is allowed to be interrupted and has a value of true or false. If the value is true, a user is required to listen to an initial whole voice before inputting or recording.

The Recording ID indicates a universally allocated resource ID of a physical storage recorded through the PR event.

The Recording Length indicates the maximum time length for recording. The unit of the Recording Length is 100ms and -1 denotes no limitation.

The Restart Key indicates that the collected inputs or records are to be discarded and a user is re-prompted and will restart a collection or recording.

The Return Key indicates that the collection is finished and the collected string is sent to the application server.

It should be noted that the parameters in the table 1 form a parameter set in the most ideal situation in the BAU specification. The minimum parameter set which should be supported is adapted to obtain the same inter-usability in different applications. Other parameters defined in the BAU package are also supported, but the parameters may be ignored when the media server does not support the parameters.

In addition, according to the first embodiment of the present invention, the BAU package carried in the SIP message sent from the SIP entity further includes variable data that may be played with the BAU package, such as date, time and time length. According to the first embodiment of the present invention, the supported type of the variable is shown in table 2 below.

**Table 2**

| Symbol | Sub Type | Definition |
|---|---|---|
| dat | mdy | Date format of month-day-year |
| dat | dym | Date format of day-month-year |
| dat | ymd | Date format of year-month-day |
| dig | - | Normal key adapted to play a phone number |
| dur | - | Duration |
| mny | - | Price using the three-letter-coding of ISO 4217 |
| tme | t12 | Time of 12-hour format |
| time | t24 | Time of 24-hour format |

It may be seen that, only one PA, PC or PR request is included in a session according to the first embodiment of the present invention. When a piece of record is played to a user in the IVR session, the user input is collected in DTMF strings. The subsequent procedure is determined by the user input. Therefore, a plurality of PA, PC or PR requests are further required to be put into one session. This requirement is achieved through a second embodiment of the present invention.

According to the second embodiment of the present invention, the procedure for interacting with a media server based on the SIP protocol is shown in Figure 2. Particularly, a signaling flow is shown as below.
F1 --> INVITE to Media Server
INVITE sip:dialog@mrs.example.com;annc.BAU.pc; \
   ip=file://selectLanguage.wav;dm=1|2|3;rsk=*;rtk=#
   Via: SIP/2.0/UDP client.example.com
   From: <sip:user@client.example.com>;tag=8001
   To:
   <sip.dialog@mrs.example.com;annc.BAU.pa;an=welcome.wav;it=3;iv=4>
   Contact: sip:user@client.example.com
   Call-ID: 12345679@client.example.com
   CSeq: 1 INVITE
   Content-Type: application/sdp Content-Length: ...
   v=0
   o=user 2890844526 2890844526 IN IP4 client.example.com
   s=Session SDP
   c=IN IP4 client.example.com
   t=3034423619 0
   m=audio 49170 RTP/AVP 0
   a=rtpmap:0 PCMU/8000
F4 --> INFO to Media Server
   INFO sip:dialog@mrs.example.com;annc.BAU.pc;\
   ip=file://enterCardNumber.wav;dm=0xxxxxxx|7xxxxxxx;rsk:=*;rtk=#
   Via: SIP/2.0/UDP client.example.com
   From: <sip:user@client.example.com>;tag=8001
   To:
   <sip:dialog@mrs.example.com;annc.BAU.pa;an=welcome.wav;it=3;iv=4>
   CSeq: 2 INFO
   Call-ID: 12345679@client.example.com

The F2 and F3 are the same as that in the first embodiment.

In the second embodiment, the procedure for interacting with the media server based on the SIP protocol particularly includes the following.

Step S201 to S204: A SIP entity exchanges messages with the media server to establish a session. A PC request is sent during establishing the session. The procedure for establishing the session is the same as that of the first embodiment of the present invention, and a repeated description thereof is omitted.

Step S205: When the inputting and collection of the DTMF strings are finished, the SIP entity sends an information message (INFO (F4-Next Request)) carrying another PA, PC or PR request to the media server. In this step, a-plurality of PA, PC or PR requests are sent in one session.

Step 206: The media server returns a response message 200 OK. The DTMF string is coded in text manner and is carried in the INFO message for returning. It should be noted that the way for returning the DTMF string is not limited to the manner in the present embodiment. The DTMF string may also be carried in a media, carried in a special coding picture in the RTP, coded by means of the INFO method and sent along the call signaling path, referring to RFC2833, as shown in Figure 2 below.

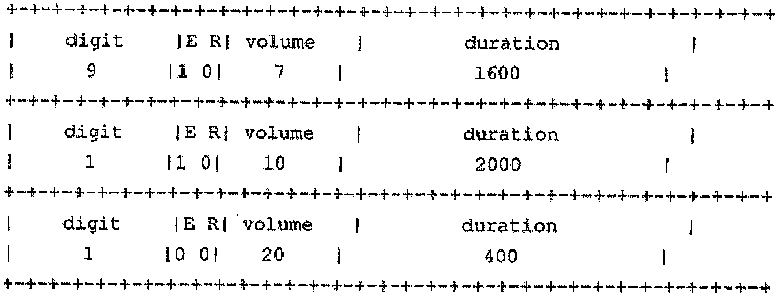

Step S207: The SIP entity sends a BYE message to the media server to terminate the session.

The case that a session is refused is not considered in both the first and second embodiments of the present invention. In view of that, based on the first and second embodiments of the present invention, in the third embodiment of the present invention, the refusing of a session is implemented.

In the third embodiment of the present invention, a session may be refused for, but is not limited to, the following reasons. The announcement to be played is not found; the media server is unable to execute the request; there is no response to a key word, or the URL format of a request is invalid.

In the third embodiment of the present invention, if the announcement to be played is not found, a response code 404 (NOT FOUND) may be used to refuse the request. Here, a specific reason value will accompany the response code. If the media server is unable to execute the requested operation, a response code 488 (NOT ACCEPTABLE HERE) is returned. If there is no response value for the key word or the URL format of the request is invalid, the response code 400 (BAD REQUEST) may be used to refuse the request.

Embodiments of the present invention provide a system for implementing an interaction based on the SIP protocol, including a SIP entity and a media server;

the SIP entity has an event package generation module and is adapted to generate a Basic Audio Server Event Package;

a communication module is adapted to interact with the media server based on the SIP protocol, carry Basic Audio Server Event Package information in a SIP message and send the SIP message to the media server; and

the media server has an SIP interface module complying with the Basic Audio Server Event Package and is adapted to perform a corresponding operation according to the Basic Audio Server Event Package information obtained from the SIP message.

The Basic Audio Server Event Package information includes a type of an operation, the operation including: Play Announcement, Play and Collect, Play and Record.

A SIP entity for interacting with a media server based on SIP protocol, includes:
an event package generation module, adapted to generate a Basic Audio Server Event Package;
a communication module, adapted to interact with the media server based on the SIP protocol, carry Basic Audio Server Event Package information in a SIP message and send the SIP message to the media server; and
the Basic Audio Server Event Package information including a type of an operation, the operation including: Play Announcement, Play and Collect, Play and Record.

A media server includes a SIP interface module complying with a Basic Audio Server Event Package and is adapted to perform a corresponding operation according to Basic Audio Server Event Package information resolved from a SIP message, the operation including at least one of Play Announcement, Play and Collect, Play and Record.

Although description and illustration of the present invention is given by referring to certain preferred embodiments of the present invention, it is evident that those skilled in the art may make various changes and modifications to the present invention without departing from the scope thereof.

The above embodiments are used to describe and explain the principle of the present invention. It should be appreciated that the specific embodiment of invention is not limited to this. For those skilled in the art, various changes and modifications to the present invention may be made without departing from the scope thereof.

## Claims

1. A method for a media server to interact with a Session Initiation Protocol, SIP entity , comprising:
receiving a SIP message (S101) carrying Basic Audio Server Event Package information sent from the SIP entity; and
establishing a session (S104) with the SIP entity ; and
performing a corresponding operation based on the Basic Audio Server Event Package information resolved from the SIP message.

2. The method according to claim 1, wherein the Basic Audio Server Event Package information uses an extended Backus-Naur Form, BNF.

3. The method according to claim 1, further comprising:
receiving a Dual Tone Multi Frequency, DTMF, string from the SIP entity carried in a SIP message or in a media.

4. The method according to claim 1, wherein the Basic Audio Server Event Package further comprises a variable data in the Basic Audio Server Event Package.

5. The method according to claim 1, wherein the operation comprises Play Announcement, Play and Collect, and Play and Record.

6. A media server for interacting with a Session Initiation Protocol, SIP, entity based on SIP protocol, comprising:
a SIP processing module, adapted to receive a SIP message carrying Basic Audio Server Event Package information sent from the SIP entity, establish a session with the SIP entity, and perform a corresponding operation according to the Basic Audio Server Event Package information resolved from the SIP message.

7. The media server according to claim 6, wherein the operation comprises Play Announcement, Play and Collect, and Play and Record.

## Patentansprüche

1. Verfahren für einen Medienserver zur Interaktion mit einer "Session Initiation Protocol"- bzw. SIP-Entität, umfassend:
Empfangen einer von der SIP-Entität gesendeten SIP-Nachricht (S101), die "Basic Audio Server Event Package"-Informationen führt; und
Herstellen einer Sitzung (S104) mit der SIP-Entität; und
Ausführen einer entsprechenden Operation auf der Basis von aus der SIP-Nachricht aufgelösten "Basic Audio Server Event Package"-Informationen.

2. Verfahren nach Anspruch 1, wobei die "Basic Audio Server Event Package"-Informationen eine erweiterte Backus-Naur-Form BNF verwenden.

3. Verfahren nach Anspruch 1, ferner umfassend:
Empfangen einer Zweiton-Mehrfrequenz- bzw. DTMF-Kette von der SIP-Entität, die in einer SIP-Nachricht oder in einem Medium geführt wird.

4. Verfahren nach Anspruch 1, wobei die "Basic Audio Server Event Package" ferner Variablendaten in der "Basic Audio Server Event Package" umfasst.

5. Verfahren nach Anspruch 1, wobei die Operation Ansage Wiedergeben, Wiedergeben und Sammeln und Wiedergeben und Aufzeichnen umfasst.

6. Medienserver zur Interaktion mit einer "Session Initiation Protocol"- bzw. SIP-Entität auf der Basis des SIP-Protokolls, umfassend:
ein SIP-Verarbeitungsmodul, ausgelegt zum Empfangen einer von der SIP-Entität gesendeten SIP-Nachricht, die "Basic Audio Server Event Package"-Informationen führt; Herstellen einer Sitzung mit der SIP-Entität und Ausführen einer entsprechenden Operation gemäß aus der SIP-Nachricht aufgelösten "Basic Audio Server Event Package"-Informationen.

7. Medienserver nach Anspruch 6, wobei die Operation Ansage Wiedergeben, Wiedergeben und Sammeln und Wiedergeben und Aufzeichnen umfasst.

## Revendications

1. Procédé permettant à un serveur multimédia d'interagir avec une entité de protocole de lancement de session, SIP, comprenant :
la réception d'un message SIP (S101) incluant des informations de paquet d'événement de serveur audio de base envoyées par l'entité SIP ; et
l'établissement d'une session (S104) avec l'entité SIP ; et
l'exécution d'une opération correspondante en fonction des informations de paquet d'événement de serveur audio de base résolues à partir du message SIP.

2. Procédé selon la revendication 1, dans lequel les informations de paquet d'événement de serveur audio de base utilisent une forme de Backus-Naur, BNF, étendue.

3. Procédé selon la revendication 1, comprenant en outre :
la réception d'une chaîne de multifréquence en code 2, DTMF, depuis l'entité SIP incluse dans un message SIP ou dans un support.

4. Procédé selon la revendication 1, dans lequel le paquet d'événement de serveur audio de base comprend en outre une donnée variable dans le paquet d'événement de serveur audio de base.

5. Procédé selon la revendication 1, dans lequel l'opération comprend l'annonce de reproduction, la reproduction et collecte, et la reproduction et l'enregistrement.

6. Serveur multimédia destiné à interagir avec une entité de protocole de lancement de session, SIP, en fonction d'un protocole SIP, comprenant :
un module de traitement SIP, adapté pour recevoir un message SIP incluant des informations de paquet d'événement de serveur audio de base envoyées par l'entité SIP, établir une session avec l'entité SIP, et exécuter une opération correspondante en fonction des informations de paquet d'événement de serveur audio de base résolues à partir du message SIP.

7. Serveur multimédia selon la revendication 6, dans lequel l'opération comprend l'annonce de reproduction, la reproduction et collecte, et la reproduction et l'enregistrement.
